# EUROPEAN PATENT SPECIFICATION

(11) **EP 3 011 660 B1**
(45) Date of publication and mention of the grant of the patent: **07.11.2018**
(21) Application number: 14801023.4
(22) Date of filing: 22.05.2014
(51) Int. Cl.: H02J 7/00, H02J 7/02, H02J 50/40, H02J 50/12, H02J 50/90

(54) **WIRELESS POWER TRANSMISSION APPARATUS AND METHOD**
VORRICHTUNG UND VERFAHREN ZUR DRAHTLOSEN ENERGIEÜBERTRAGUNG
APPAREIL ET PROCÉDÉ DE TRANSMISSION D'ÉNERGIE SANS FIL

(30) Priority: 23.05.2013 KR 20130058162
(43) Date of publication of application: 27.04.2016
(73) Proprietor: Samsung Electronics Co., Ltd., Suwon-si, Gyeonggi-do 443-742 (KR)
(72) Inventor: KIM, Nam Yun, Seoul 134- 080 (KR); KWON, Sang Wook, Seongnam-si, Gyeonggi-do 463- 907 (KR); KWON, Hyuk Choon, Seoul 133- 790 (KR); KIM, Ki Young, Yongin-si, Gyeonggi-do 448- 140 (KR); KIM, Dong Zo, Yongin-si, Gyeonggi-do 448-518 (KR); SONG, Keum Su, Seoul 137- 072 (KR); AHN, Chi Hyung, Suwon-si, Gyeonggi-do 443- 767 (KR)
(74) Representative: Gulde & Partner
(86) International application number: PCT/KR2014/004582
(87) International publication number: WO 2014/189307

(56) References cited:
- KR-A- 20130 006 363
- US-A1- 2010 040 120
- US-A1- 2012 049 642
- US-A1- 2012 161 538
- US-A1- 2012 223 589
- US-A1- 2012 244 822
- US-A1- 2012 286 726
- US-A1- 2012 299 389
- US-A1- 2012 326 524

## Description

### Technical Field

The following description relates to an apparatus and a method for transmitting power wirelessly in an environment in which a plurality of wireless power transmission apparatuses charge a plurality of wireless power reception apparatuses.

### Background Art

Research on wireless power transmission has been started to overcome an increase in the inconvenience of wired power supplies and the limited capacity of conventional batteries due to a rapid increase in various electronic devices including electric vehicles, mobile devices, and other devices intended to operate without a wired power supply. One wireless power transmission technology uses resonance characteristics of radio frequency (RF) devices. A wireless power transmission system using resonance characteristics may include a source configured to supply power, and a target configured to receive the supplied power.

### Disclosure of Invention

### Solution to Problem

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a wireless power transmission apparatus for preventing a misconnection between the wireless power transmission apparatus and a wireless power reception apparatus in an environment in which a plurality of wireless power transmission apparatuses charge a plurality of wireless power reception apparatuses include a detector configured to detect a signal induced in a resonator; and a controller configured to determine either one or both of a transmission interval of a wake-up power and a point in time at which the wake-up power is transmitted to prevent a waveform of the detected signal from overlapping a waveform of the wake-up power.

The detector may further include an envelope detector configured to detect an envelope of the induced signal before the wake-up power is transmitted.

The resonator may be configured to periodically transmit a short beacon for recognizing the wireless power reception apparatus, and a long beacon for waking up a communication module of the wireless power reception apparatus, based on the determined transmission interval.

A transmission interval of the long beacon may be longer than a transmission interval of the short beacon, and an amount of power of the long beacon may be greater than an amount of power of the short beacon.

The controller may be further configured to determine a transmission interval of a long beacon corresponding to the wake-up power to be different from an interval of the detected signal.

The controller may be further configured to determine a point in time at which a long beacon corresponding to the wake-up power is transmitted so that transmission of the long beacon is initiated at a point in time that is different from a point in time at which the detected signal has a high value.

The wireless power transmission apparatus may further include a communication unit configured to receive information about either one or both of a transmission interval of a short beacon and a transmission interval of a long beacon from another wireless power transmission apparatus using Bluetooth low energy (BLE) communication.

The wireless power transmission apparatus may further include a power generator configured to generate power to be transmitted through the resonator using a resonant frequency at which a mutual resonance between the wireless power transmission apparatus and the wireless power reception apparatus occurs.

In another general aspect, a wireless power transmission apparatus for preventing a misconnection between the wireless power transmission apparatus and a wireless power reception apparatus in an environment in which a plurality of wireless power transmission apparatuses charge a plurality of wireless power reception apparatuses includes a detector configured to detect a signal induced in a resonator; a controller configured to determine a point in time at which a wake-up power is transmitted to be different from a point in time at which a waveform of the detected signal changes; and a recognizer configured to control a point in time at which low power to be used for communication by the wireless power reception apparatus is supplied to the resonator, and recognize a normal connection of a wireless power reception apparatus located in a charging area of the wireless power transmission apparatus, in response to a search message being received from the wireless power reception apparatus performing communication using the wake-up power.

The wireless power transmission apparatus may further include a communication unit configured to receive the search message from the wireless power transmission apparatus; and the recognizer may be further configured to control the point in time at which the low power is supplied to the resonator so that supply of the low power to the resonator is blocked for a predetermined time and the low power is re-supplied to the resonator after the predetermined time has elapsed, in response to the communication unit receiving the search message.

The communication unit may be further configured to receive information about either one or both of a transmission interval of a short beacon and a transmission interval of a long beacon from another wireless power transmission apparatus using Bluetooth low energy (BLE) communication.

The wireless power transmission apparatus may further include a power generator configured to generate power to be transmitted through the resonator using a resonant frequency at which a mutual resonance between the wireless power transmission apparatus and the wireless power reception apparatus occurs.

The point in time at which the low power to be used for communication by the wireless power reception apparatus is supplied may be set to be different for each of the plurality of wireless power transmission apparatuses.

In another general aspect, a wireless power transmission method of preventing a misconnection between a wireless power transmission apparatus and a wireless power reception apparatus in an environment in which a plurality of wireless power transmission apparatuses charge a plurality of wireless power reception apparatuses includes detecting a signal induced in a resonator; and determining either one or both of a transmission interval of a wake-up power and a point in time at which the wake-up power is transmitted to prevent a waveform of the detected signal from overlapping a waveform of the wake-up power.

The detecting may further include detecting an envelope of the induced signal before the wake-up power is transmitted.

The method may further including transmitting, by the resonator, a short beacon for recognizing the wireless power reception apparatus and a long beacon for waking up a communication module of the wireless power reception apparatus, based on the determined transmission interval.

The determining may further include determining a transmission interval of a long beacon corresponding to the wake-up power to be different from an interval of the detected signal.

The determining may further include determining a point in time at which a long beacon corresponding to the wake-up power is transmitted so that transmission of the long beacon is initiated at a point in time that is different from a point in time at which the detected signal has a high value.

The method may further include receiving information about either one or both of a transmission interval of a short beacon and a transmission interval of a long beacon from another wireless power transmission apparatus using Bluetooth low energy (BLE) communication.

In another general aspect, a wireless power transmission method of preventing a misconnection between a wireless power transmission apparatus and a wireless power reception apparatus in an environment in which a plurality of wireless power transmission apparatuses charge a plurality of wireless power reception apparatuses includes detecting a signal received from another wireless power transmission apparatus; and transmitting a wake-power to be used for communication by the wireless power reception apparatus based on the detected signal so that the wake-up power is not transmitted while a signal is being received from the other wireless transmission apparatus.

The method of claim may further include determining either one or both of a transmission interval of the wake-up power and a point in time at which the wake-up power is transmitted to prevent a waveform of the detected signal from overlapping a waveform of the wake-up power; and the transmitting may further include transmitting the wake-up power at the determined either one or both of transmission interval of the wake-up power and the point in time at which the wake-up power is transmitted.

The determining may further include determining either one or both of the transmission interval of the wake-up power to be different from an interval of the detected signal and the point in time at which the wake-up power is transmitted to be different from a point in time at which the detected signal is transmitted.

Other features and aspects will be apparent from the following detailed description, the drawings, and the claims.

Here are identified two patent documents: US 2012/244822 A1 and US 2012/049642 A1, both of them disclosing a wireless power transmission apparatus with a wake up system towards a plurality of wireless power reception apparatuses. None of these documents describe, in the wording of the claims, detecting a signal induced by another power transmission apparatus.

### Brief Description of Drawings

FIG. 1 illustrates an example of a wireless power transmission and reception system.
FIG. 2 illustrates an example of an environment in which wireless power transmission apparatuses are used.
FIG. 3 illustrates an example of a wireless power transmission apparatus.
FIG. 4 illustrates another example of a wireless power transmission apparatus.
FIG. 5 illustrates an example of a method of preventing a misconnection in a wireless power transmission apparatus when all of a plurality of wireless power reception apparatuses are woken up within a predetermined time.
FIG. 6 illustrates another example of a wireless power transmission apparatus.
FIG. 7 illustrates an example of a short beacon and a long beacon transmitted by a wireless power transmission apparatus.
FIG. 8 illustrates an example of a wireless power transmission apparatus transmitting a long beacon at an initial point that is different from an initial point at which another wireless power transmission apparatus transmits a long beacon.
FIG. 9 illustrates an example of a wireless power transmission method.

### Mode for the Invention

The following detailed description is provided to assist the reader in gaining a comprehensive understanding of the methods, apparatuses, and/or systems described herein. However, various changes, modifications, and equivalents of the methods, apparatuses, and/or systems described herein will be apparent to one of ordinary skill in the art. The sequences of processing steps and/or operations described herein are merely examples, and are not limited to those set forth herein, but may be changed as will be apparent to one of ordinary skill in the art, with the exception of operations necessarily occurring in a certain order. Also, descriptions of functions and constructions that are well known to one of ordinary skill in the art may be omitted for increased clarity and conciseness.

Throughout the drawings and the detailed description, the same reference numerals refer to the same elements. The drawings may not be to scale, and the relative size, proportions, and depiction of elements in the drawings may be exaggerated for clarity, illustration, and convenience.

The invention is defined by the features of the independent claims 1 and 13. Preferred embodiments are defined in the dependent claims.

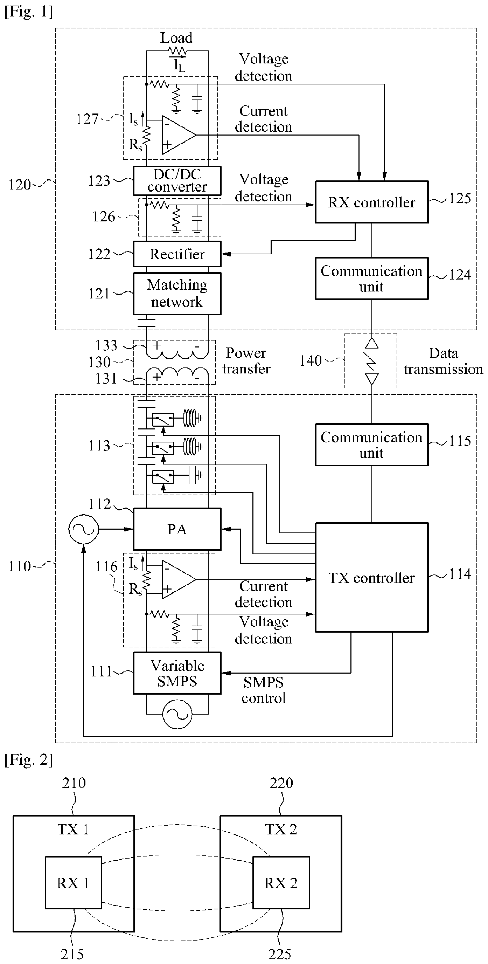

FIG. 1 illustrates an example of a wireless power transmission and reception system.

Referring to FIG. 1, the wireless power transmission system includes a source 110 and a target 120. The source 110 is a device configured to supply wireless power, and may be any electronic device capable of supplying power, for example, a pad, a terminal, a tablet personal computer (PC), a television (TV), a medical device, or an electric vehicle. The target 120 is a device configured to receive wireless power, and may be any electronic device requiring power to operate, for example, a pad, a terminal, a tablet PC, a medical device, an electric vehicle, a washing machine, a radio, or a lighting system.

The source 110 includes a variable switching mode power supply (SMPS) 111, a power amplifier (PA) 112, a matching network 113, a transmission (TX) controller 114 (for example, transmission control logic), a communication unit 115, and a power detector 116.

The variable SMPS 111 generates a direct current (DC) voltage by switching an alternating current (AC) voltage having a frequency in a band of tens of hertz (Hz) output from a power supply. The variable SMPS 111 may output a fixed DC voltage,, or may output an adjustable DC voltage that may be adjusted under the control of the transmission controller 114.

The variable SMPS 111 may control its output voltage supplied to the PA 112 based on a level of power output from the PA 112 so that the PA 112 may operate in a saturation region with a high efficiency at all times, thereby enabling a maximum efficiency to be maintained at all levels of the output power of the PA 112. The PA 112 may be, for example, a Class-E amplifier.

If a fixed SMPS is used instead of the variable SMPS 111, a variable DC-to-DC (DC/DC) converter may be necessary. In this example, the fixed SMPS outputs a fixed DC voltage to the variable DC/DC converter, and the variable DC/DC converter controls is output voltage supplied to the PA 112 based on the level of the power output from the PA 112 so that the PA 112 may operate in the saturation region with a high efficiency at all times, thereby enabling the maximum efficiency to be maintained at all levels of the output power of the PA 112.

The power detector 116 detects an output current and an output voltage of the variable SMPS 111, and transmits, to the transmission controller 114, information on the detected output current and the detected output voltage. Also, the power detector 116 may detect an input current and an input voltage of the PA 112.

The PA 112 generates power by converting a DC voltage having a predetermined level supplied to the PA 112 by the variable SMPS 111 to an AC voltage using a switching pulse signal having a frequency in a band of a few megahertz (MHz) to tens of MHz. For example, the PA 112 may convert a DC voltage supplied to the PA 112 to an AC voltage having a reference resonant frequency F_{Ref}, and may generate communication power used for communication, and/or charging power used for charging. The communication power and the charging power may be used in a plurality of targets.

If a high power from a few kilowatts (kW) to tens of kW is to be transmitted using a resonant frequency in a band of tens of kilohertz (kHz) to hundreds of kHz, the PA 112 may be omitted, and power may be supplied to a source resonator 131 from the variable SMPS 111 or a high-power power supply. For example, an inverter may be used in lieu of the PA 112. The inverter may convert a DC power supplied from the high-power power supply to an AC power. The inverter may convert the power by converting a DC voltage having a predetermined level to an AC voltage using a switching pulse signal having a frequency in a band of tens of kHz to hundreds of kHz. For example, the inverter may convert the DC voltage having the predetermined level to an AC voltage having a resonant frequency of the source resonator 131 having a frequency in a band of tens of kHz to hundreds of kHz.

As used herein, the term "communication power" refers to a low power of 0.1 milliwatts (mW) to 1 mW. The term "charging power" refers to a high power of a few mW to tens of kilowatts (kW) consumed by a load of a target. As used herein, the term "charging" refers to supplying power to a unit or element that is configured to charge a battery or other rechargeable device. Additionally, the term "charging" refers to supplying power to a unit or element configured to consume power. For example, the term "charging power" may refer to power consumed by a target while operating, or power used to charge a battery of the target. The unit or element may be, for example, a battery, a display, a sound output circuit, a main processor, or any of various type of sensors.

As used herein, the term "reference resonant frequency" refers to a resonant frequency nominally used by the source 110, and the term "tracking frequency" refers to a resonant frequency used by the source 110 that has been adjusted based on a preset scheme.

The transmission controller 114 may detect a reflected wave of the communication power or the charging power, and may detect mismatching that occurs between a target resonator 133 and the source resonator 131 based on the detected reflected wave. To detect the mismatching, for example, the transmission controller 114 may detect an envelope of the reflected wave, a power amount of the reflected wave, or any other characteristic of the reflected wave that is affected by mismatching.

The matching network 113 compensates for impedance mismatching between the source resonator 131 and the target resonator 133 to achieve optimal matching under the control of the transmission controller 114. The matching network 113 includes at least one inductor and at least one capacitor each connected to a respective switch controlled by the transmission controller 114.

If a high power is to be transmitted using a resonant frequency in a band of tens of kHz to hundreds of kHz, the matching network 113 may be omitted from the source 110 because the effect of the matching network 113 may be reduced when transmitting the high power.

The transmission controller 114 may calculate a voltage standing wave ratio (VSWR) based on a voltage level of the reflected wave and a level of an output voltage of the source resonator 131 or the PA 112. In one example, if the VSWR is greater than a predetermined value, the transmission controller 114 may determine that a mismatch is detected between the source resonator 131 and the target resonator 133.

In another example, if the transmission controller 114 detects that the VSWR is greater than the predetermined value, the transmission controller 114 may calculate a wireless power transmission efficiency for each of N tracking frequencies, determine a tracking frequency F_{Best} providing the best wireless power transmission efficiency among the N tracking frequencies, and adjust the reference resonant frequency F_{Ref} to the tracking frequency F_{Best}. The N tracking frequencies may be set in advance.

The transmission controller 114 may adjust a frequency of the switching pulse signal used by the PA 112. The frequency of the switching pulse signal may be determined under the control of the transmission controller 114. For example, by controlling the PA 112, the transmission controller 114 may generate a modulated signal to be transmitted to the target 120. In other words, the transmission controller 114 may transmit a variety of data to the target 120 using in-band communication. The transmission controller 114 may also detect a reflected wave, and may demodulate a signal received from the target 120 from an envelope of the detected reflected wave.

The transmission controller 114 may generate a modulated signal for in-band communication using various methods. For example, the transmission controller 114 may generate the modulated signal by turning the switching pulse signal used by the PA 112 on and off, by performing delta-sigma modulation, or by any other modulation method known to one of ordinary skill in the art. Additionally, the transmission controller 114 may generate a pulse-width modulated (PWM) signal having a predetermined envelope.

The transmission controller 114 may determine an initial wireless power to be transmitted to the target 120 based on a change in a temperature of the source 110, a battery state of the target 120, a change in an amount of power received by the target 120, and/or a change in a temperature of the target 120.

The source 110 may further include a temperature measurement sensor (not illustrated) configured to sense a change in temperature. The source 110 may receive from the target 120 information regarding the battery state of the target 120, the change in the amount of power received by the target 120, and/or the change in the temperature of the target 120 by communication with the target 120. The source 110 may detect the change in the temperature of the target 120 based on the information received from the target 120.

The transmission controller 114 may adjust a voltage supplied to the PA 112 based on the change in the temperature of the target 120 using a lookup table (LUT). The lookup table may store a level of the voltage to be supplied to the PA 112 based on the change in the temperature of the source 110. For example, when the temperature of the source 110 rises, the transmission controller 114 may reduce the voltage to be supplied to the PA 112 by controlling the variable SMPS 111.

The communication unit 115 may perform out-of-band communication using a separate communication channel. The communication unit 115 may include a communication module, such as a ZigBee module, a Bluetooth module, or any other communication module known to one of ordinary skill in the art that the communication unit 115 may use to transmit or receive data 140 to or from the target 120 using the out-of-band communication.

The source resonator 131 transmits electromagnetic energy 130 to the target resonator 133. For example, the source resonator 131 may transmit the communication power or the charging power to the target 120 via magnetic coupling with the target resonator 133.

The source resonator 131 may be made of a superconducting material. Also, although not shown in FIG. 1, the source resonator 131 may be disposed in a container of refrigerant to enable the source resonator 131 to maintain a superconducting state. A heated refrigerant that has transitioned to a gaseous state may be liquefied to a liquid state by a cooler. The target resonator 133 may also be made of a superconducting material. In this instance, the target resonator 133 may also be disposed in a container of refrigerant to enable the target resonator 133 to maintain a superconducting state of the target resonator 133.

As illustrated in FIG. 1, the target 120 includes a matching network 121, a rectifier 122, a DC/DC converter 123, a communication unit 124, and a reception (RX) controller 125 (for example, reception control logic).

The target resonator 133 receives the electromagnetic energy 130 from the source resonator 131. For example, the target resonator 133 may receive the communication power or the charging power from the source 110 via a magnetic coupling with the source resonator 131. Additionally, the target resonator 133 may receive data from the source 110 using the in-band communication.

The target resonator 133 may receive the initial wireless power determined by the TX controller 114 based on the change in the temperature of the source 110, the battery state of the target 120, the change in the amount of power received at the target 120, and/or the change in the temperature of the target 120.

The matching network 121 matches an input impedance viewed from the source 110 to an output impedance viewed from a load of the target 120. The matching network 121 may be configured to have at least one capacitor and at least one inductor.

The rectifier 122 generates a DC voltage by rectifying an AC voltage received by the target resonator 133.

The DC/DC converter 123 adjusts a level of the DC voltage output from the rectifier 122 based on a voltage required by the load. As an example, the DC/DC converter 123 may adjust the level of the DC voltage output from the rectifier 122 to a level in a range of 3 volts (V) to 10 V.

The voltage detector 126 detects a voltage of an input terminal of the DC/DC converter 123, and the power detector 127 detects a current and a voltage of an output terminal of the DC/DC converter 123. The detected voltage of the input terminal may be used to calculate a wireless transmission efficiency of the power received from the source 110. Additionally, the detected current and the detected voltage of the output terminal may be used by the reception controller 125 to calculate an amount of power actually transferred to the load. The transmission controller 114 of the source 110 may calculate an amount of power that needs to be transmitted by the source 110 to the target 120 based on an amount of power required by the load and the amount of power actually transferred to the load.

If the amount of the power of the actually transferred to the load calculated by the reception controller 124 is transmitted to the source 110 by the communication unit 124, the source 110 may calculate an amount of power that needs to be transmitted to the target 120.

The RX controller 125 may perform in-band communication to transmit or receive data using a resonant frequency. During the in-band communication, the reception controller 125 may demodulate a received signal by detecting a signal between the target resonator 133 and the rectifier 122, or detecting an output signal of the rectifier 122. In particular, the reception controller 125 may demodulate a message received using the in-band communication.

Additionally, the reception controller 125 may adjust an input impedance of the target resonator 133 using the matching network 121 to modulate a signal to be transmitted to the source 110. For example, the reception controller 125 may adjust the matching network 121 to increase the impedance of the target resonator 133 so that a reflected wave will be detected by the transmission controller 114 of the source 110. Depending on whether the reflected wave is detected, the transmission controller 114 of the source 110 may detect a first value, for example a binary number "0," or a second value, for example a binary number "1." For example, when the reflected wave is detected, the transmission controller 114 may detect "0", and when the reflected wave is not detected, the transmission controller 114 may detect "1". Alternatively, when the reflected wave is detected, the transmission controller 114 may detect "1", and when the reflected wave is not detected, the transmission controller 114 may detect "0".

The communication unit 124 of the target 120 may transmit a response message to the communication unit 115 of the source 110. For example, the response message may include any one or any combination of a product type of the target 120, manufacturer information of the target 120, a model name of the target 120, a battery type of the target 120, a charging scheme of the target 120, an impedance value of a load of the target 120, information on characteristics of the target resonator 133 of the target 120, information on a frequency band used by the target 120, an amount of power consumed by the target 120, an identifier (ID) of the target 120, product version information of the target 120, standard information of the target 120, and any other information about the target 120.

The communication unit 124 may perform out-of-band communication using a separate communication channel. For example, the communication unit 124 may include a communication module, such as a ZigBee module, a Bluetooth module, or any other communication module known to one of ordinary skill in the art that the communication unit 124 may use to transmit and receive the data 140 to and from the source 110 using the out-of-band communication.

The communication unit 124 may receive a wake-up request message from the source 110, and the power detector 127 may detect an amount of power received by the target resonator 133. The communication unit 124 may transmit to the source 110 information on the detected amount of the power received by the target resonator 133. The information on the detected amount of the power received by the target resonator 133 may include, for example, an input voltage value and an input current value of the rectifier 122, an output voltage value and an output current value of the rectifier 122, an output voltage value and an output current value of the DC/DC converter 123, and any other information about the detected amount of power received by the target resonator 133.

The source 110 and the target 120 of FIG. 1 may correspond to a wireless power transmission apparatus and a wireless power reception apparatus to be described hereinafter.

FIG. 2 illustrates an example of an environment in which wireless power transmission apparatuses (TXs) are used.

Referring to FIG. 2, a first wireless power reception apparatus (RX1) 215 is located in a charging area of a first TX (TX1) 210, and a second RX (RX2) 225 is located in a charging area of a second TX (TX2) 220. As a distance between the TX1 210 and the TX2 220 decreases, magnetic fields generated by the TX1 210 and the TX2 220 indicated by the dashed lines in FIG. 2 may interact with each other.

In this example, although the RX1 215 is to be connected to the TX1 210 for charging, a communication channel may be formed between the RX1 215 and the TX2 220, and thus an improper connection, for example, a misconnection, may occur. Also, although the RX2 225 is to be connected to the TX2 220 for charging, a communication channel may be formed between the RX2 225 and the TX1 210, and thus an improper connection may occur.

The TX1 210 periodically transmits a short beacon. When the RX1 215 is located in the charging area of the TX1 210, an impedance of the TX1 210 changes, enabling a presence of the RX1 215 to be sensed by the short beacon. In addition, the TX1 210 periodically transmits a long beacon, and a communication module of the RX1 215 receiving the long beacon receives from the long beacon a minimum amount of power that the communication module needs to operate and communicate with the TX1 210.

In addition, the TX2 220 periodically transmits a short beacon to sense a presence of the RX2 225, and periodically transmits a long beacon to enable a communication module of the RX2 225 to communicate with the TX2 220.

However, when the distance between the TX1 210 and the TX2 220 decreases, both the RX1 215 and the RX2 225 may be sensed by the short beacons transmitted by the TX1 210 and the TX2 220, and the communication modules of both the RX1 215 and the RX2 225 may be operated by the long beacons transmitted by the TX1 210 and the TX2 220.

In this instance, the TX1 210 and the TX2 220 may transmit long beacons at different points in time so that the RX1 215 and the RX2 225 may operate at different points in time, thereby enabling the RX1 215 and the RX2 225 to be recognized normally by the TX1 210 and the TX2 220, respectively. For example, when the communication module of the RX1 215 operates first and transmits a message for searching for a TX, the TX1 210 receives the search message and allocates a communication channel in response to the receipt of the search message, thereby forming a communication channel between the RX1 215 and the TX1 210 first. Then, when the communication module of the RX2 225 operates, the RX2 225 transmits a message for searching for a TX, and the TX2 220 receives the search message and allocates a communication channel to the RX2 225 in response to the receipt of the search message, thereby forming a communication channel between the RX2 225 and the TX2 220.

Classes of the TX1 210 and the TX2 220 may be categorized based on power capacities. For example, TXs may be categorized into different classes for 10 watts (W), 16 W, and 22 W. Classes of the RX1 215 and the RX2 225 may be categorized based on an amount of power requested. For example, RXs may be categorized into different classes for 3.5 W. and 6.5 W. However, these classes are merely examples, and other classes may be used instead of or in addition to these classes.

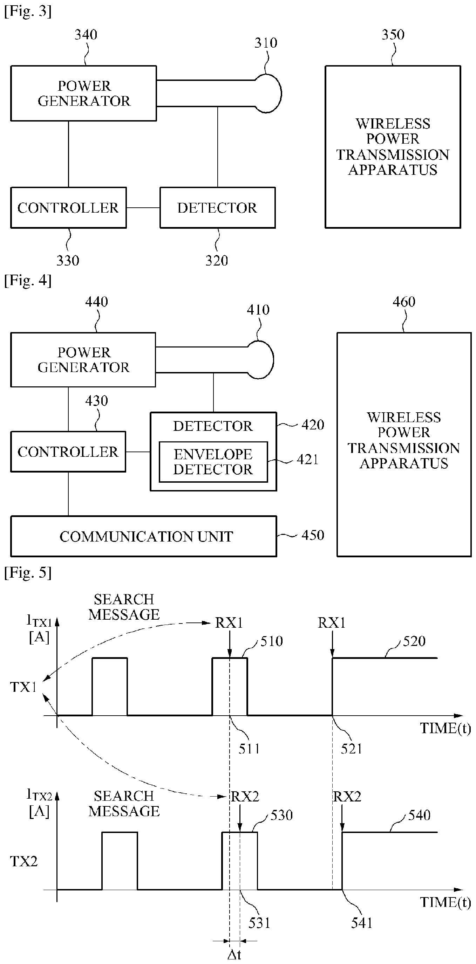

FIG. 3 illustrates an example of a wireless power transmission apparatus.

Referring to FIG. 3, the wireless power transmission apparatus includes a resonator 310, a detector 320, a controller 330, and a power generator 340.

The resonator 310 periodically transmits a short beacon for recognizing a wireless power reception apparatus, and a long beacon for waking up a communication module of the wireless power reception apparatus. Respective transmission intervals of the short beacon and the long beacon and respective points in time at which transmission of the short beacon and the long beacon are initiated may be determined by the controller 330.

When a wireless power reception apparatus is located in a set charging area of the wireless power transmission apparatus, an impedance of the wireless power transmission apparatus sensed through the short beacon changes, compared to a case in which a wireless power reception apparatus is not located in the charging area. The detector 320 may determine that the wireless power reception apparatus is located in the charging area based on a change in the impedance.

The long beacon wakes up a communication module of the wireless power reception apparatus, and the wireless power reception apparatus communicates with the wireless power transmission apparatus.

When a communication channel is formed between the wireless power transmission apparatus and the wireless power reception apparatus, the resonator 310 transmits power generated by the power generator 340 to the wireless power reception apparatus through a mutual resonance with a resonator of the wireless power reception apparatus. The transmitted power may be used to charge the wireless power reception apparatus. An amount of power to be transmitted may be determined by the controller 330.

A transmission interval of the long beacon is longer than a transmission interval of the short beacon, and an amount of power of the long beacon is greater than an amount of power of the short beacon. Since the long beacon provides power to be used for waking up the communication module of the wireless power reception apparatus, an amount of power allocated to the long beacon is greater than an amount of power allocated to the short beacon.

The detector 320 detects a signal induced in the resonator 310. The detector 320 detects the signal induced in the resonator 310 before the long beacon and the short beacon are transmitted through the resonator 310. Before the long beacon and the short beacon are transmitted through the resonator 310, the signal detected in the resonator 310 is induced in the resonator by a wireless power transmission apparatus 350.

The controller 330 determines either one or both of a transmission interval of a wake-up power and a point in time at which the wake-up power is transmitted to prevent a waveform of the signal detected by the detector 320 from overlapping a waveform of the wake-up power.

The controller 330 may determine the transmission interval of the wake-up power to be different from an interval of the signal detected by the detector 320. For example, the controller 330 may determine the transmission interval of the wake-up power so that the wake-up power is transmitted at a point in time that is different from a point in time at which the detected signal is transmitted to prevent the waveform of the detected signal from overlapping the waveform of the wake-up power.. By determining the transmission interval of the wake-up power or the point in time at which the wake-up power is transmitted to be different from the detected signal or the point in time at which the detected signal is transmitted, a time at which the communication module of the wireless power reception apparatus is woken up may be different from a time at which a communication module of another wireless power reception apparatus is woken up. A woken-up communication module of the wireless power reception apparatus may form a communication channel with the wireless power transmission apparatus based on a sequence in which communication modules are woken up, thereby preventing the wireless power reception apparatus from forming a communication channel with an incorrect wireless power transmission apparatus. An incorrect wireless power transmission apparatus is a wireless power transmission apparatus not covering a charging area in which the wireless power reception apparatus is located.

The long beacon corresponds to the wake-up power. The controller 330 determines the transmission interval of the long beacon corresponding to the wake-up power to be different from an interval of the signal detected by the detector 320. When the long beacon is received by the wireless power reception apparatus, the communication module is woken up by the wake-up power.

When the communication module of the wireless power reception apparatus is woken up, the controller 330 performs in-band communication. In-band communication is a communication scheme in which a frequency used to transmit power is the same as a frequency used to transmit and receive data. Transmission of power and transmission and reception of data are performed using a resonant frequency through the resonator 310.

The controller 330 determines the point in time at which the long beacon corresponding to the wake-up power is transmitted so that transmission of the long beacon is initiated at a point in time that is different from a point in time at which the signal detected by the detector 320 has a high value. The controller 330 adjusts the point in time at which the long beacon is transmitted so that the long beacon is transmitted at a point in time that is different from a point in time at which the wireless power transmission apparatus 350 transmits a long beacon.

The controller 330 may adjust a waveform duration of the wake-up power to prevent a waveform of the signal detected by the detector 320 from overlapping a waveform of the wake-up power.

The power generator 340 generates power to be transmitted through the resonator 310 using a resonant frequency at which a mutual resonance between the wireless power transmission apparatus and the wireless power reception apparatus occurs. For example, the power generator 340 may be supplied with power from a wired power supply, and perform switching to generate power having a resonant frequency through a power amplifier, thereby generating power to be transmitted through the resonator 310.

FIG. 4 illustrates another example of a wireless power transmission apparatus.

Referring to FIG. 4, the wireless power transmission apparatus includes a resonator 410, a detector 420, a controller 430, a power generator 440, and a communication unit 450.

The resonator 410 periodically transmits a short beacon for recognizing a wireless power reception apparatus, and a long beacon for waking up a communication module of the wireless power reception apparatus. Respective transmission intervals of the short beacon and the long beacon and respective points in time at which transmission of the short beacon and the long beacon are initiated may be determined by the controller 430.

When a wireless power reception apparatus is located in a set charging area of the wireless power transmission apparatus, an impedance of the wireless power transmission apparatus sensed through the short beacon changes, compared to a case in which a wireless power reception apparatus is not located in the charging area. For example, the detector 420 may determine that the wireless power reception apparatus is located in the charging area based on a change in the impedance.

The long beacon wakes up a communication module of the wireless power reception apparatus, and the wireless power reception apparatus communicates with the wireless power transmission apparatus.

When a communication channel is formed between the wireless power transmission apparatus and the wireless power reception apparatus, the resonator 410 transmits power generated by the power generator 440 to the wireless power reception apparatus through a mutual resonance with a resonator of the wireless power reception apparatus. The transmitted power may be used to charge the wireless power reception apparatus. An amount of power to be transmitted may be determined by the controller 430.

The detector 420 detects a signal induced in the resonator 410. The detector 420 detects the signal induced in the resonator 410 before the long beacon and the short beacon are transmitted through the resonator 410. Before the long beacon and the short beacon are transmitted through the resonator 410, the signal detected in the resonator 410 is induced by a wireless power transmission apparatus 460.

The detector 420 includes an envelope detector 421.

The envelope detector 421 detects an envelope of the signal induced in the resonator 410 before a wake-up power is transmitted through the resonator 410.

The controller 430 analyzes a shape of the detected envelope to calculate an interval of the signal induced in the resonator 410, a point in time at which the induced signal has a high value, and a point in time at which the induced signal has a low value. For example, the high value may be a greatest value of the detected envelope, and the low value may be a lowest value of the detected envelope.

The controller 430 determines a transmission interval of the wake-up power to be different from an interval of the signal detected by the detector 420. The controller 430 determines the transmission interval of the wake-up power so that the wake-up power is transmitted at a point in time that is different from a point in time at which the detected signal is transmitted. By determining the transmission interval of the wake-up power or the point in time at which the wake-up power is transmitted to be different from an interval of the detected signal or a point in time at which the detected signal is transmitted, the wireless power reception apparatus may be prevented from forming a communication channel with an incorrect wireless power transmission apparatus, for example, the wireless power transmission apparatus 460.

The long beacon corresponds to the wake-up power. The controller 430 may determine a transmission interval of the long beacon corresponding to the wake-up power to be different from an interval of the signal detected by the detector 420. When the long beacon is received by the wireless power reception apparatus, a communication module is woken up by the wake-up power.

When the communication module of the wireless power reception apparatus is woken up, the controller 430 may perform out-of-band communication. Out-of-band communication is a communication scheme in which a frequency used to transmit power is different from a frequency used to transmit and receive data. Transmission and reception of data are performed using a separate communication frequency through the communication unit 450.

The controller 430 determines a point in time at which the long beacon corresponding to the wake-up power is transmitted so that transmission of the long beacon is initiated at a point in time that is different from a point in time at which the signal detected by the detector 420 has a high value. The controller 430 adjusts the point in time at which the long beacon is transmitted so that the long beacon is transmitted at a point in time that is different from a point in time at which the wireless power transmission apparatus 460 transmits a long beacon.

The power generator 440 may generate power to be transmitted through the resonator 410, using a resonant frequency at which a mutual resonance between the wireless power transmission apparatus and the wireless power reception apparatus occurs. For example, the power generator 440 may be supplied with power from a wired power supply, and perform switching to generate power having a resonant frequency through a power amplifier and an AC-to-DC (AC/DC) converter, thereby generating power to be transmitted through the resonator 410.

The communication unit 450 may receive information about either one or both of a transmission interval of a short beacon and a transmission interval of a long beacon from the wireless power transmission apparatus 460 using Bluetooth low energy (BLE) communication. The controller 430 may adjust a transmission interval of a long beacon to be transmitted through the resonator 410 to be different from a transmission interval of a long beacon of the wireless power transmission apparatus 460 based on the transmission interval of the long beacon of the wireless power transmission apparatus 460.

FIG. 5 illustrates an example of a method of preventing a misconnection in a wireless power transmission apparatus when all of a plurality of wireless power reception apparatuses are woken up within a predetermined time.

Referring to FIG. 5, a TX1 periodically transmits a low power. The low power may include a long beacon or a short beacon. In the example of FIG. 5, an RX2 is located in a charging area of a TX2 at a point in time 511, and an RX1 is located in a charging area of the TX1 at a point in time 531. A difference t between the point in time 511 and the point in time 531 is a time during which the woken-up RX1 and the woken-up RX2 may not form a communication channel with the TX1 or the TX2. At the point in time 531 at which the RX1 is located in the charging area of the TX1, the RX2 has not yet formed a communication channel with the TX1 or the TX2.

The RX2 is woken up using low power 530 transmitted by the TX2, and operates a communication module. The low power 530 is insufficient to wake up the RX1. The RX2 transmits a search message using the communication module. The search message is a message for searching for a TX that may charge the RX2. Transmission of a search message may also be referred to as performing an advertisement operation. The TX1 receives the search message from the RX2 and senses that the RX2 is woken up.

The RX1 is woken up using a supply of low power 510 transmitted by the TX1, and operates a communication module. The supply of low power 510 is insufficient to wake up the RX2. The RX1 transmits a search message using the communication module. The search message is a message for searching for a TX that may charge the RX1. The TX1 receives the search message from the RX1 and senses that the RX1 is woken up.

When the TX1 senses that the RX1 and the RX2 are woken up, the TX1 blocks the supply of low power 510. When the supply of the supply of low power 510 is blocked by the TX1, the RX1 cannot perform communication because the supply of low power 510 provides a minimum amount of power needed for the communication module to operate.

Similar to the TX1, the TX2 receives search messages from the RX1 and the RX2 (not shown in FIG. 5), and senses that the RX1 and the RX2 are woken up. When the TX2 senses that the RX1 and the RX2 are woken up, the TX2 blocks a supply of the low power 530. When the supply of the low power 530 is blocked by the TX2, the RX2 cannot perform communication.

When the supply of the low power 510 is blocked by the TX1 and the supply of the low power 530 is blocked by the TX2, the RX1 and the RX2 cannot initiate communication. When supply of low power 520 is resumed by the TX1 at a point in time 521, the RX1 is woken up again and initiates communication. The RX2 is not woken up by the resumed supply of the low power 520, the RX1 transmits a search message to the TX1, and the TX1 recognizes a normal connection with the RX1 transmitting the search message. The TX1 allocates a communication channel to the RX1 for the RX1 to use to perform communication continuously.

When a supply of low power 540 is resumed by the TX2 at a point in time 541, the RX2 is woken up again and initiates communication. Since the TX1 has previously formed a communication channel with the RX1, the RX2 transmits a search message to the TX2, and the TX2 recognizes a normal connection with the RX2 transmitting the search message. The TX2 allocates a communication channel to the RX2 for the RX2 to use to perform communication continuously.

The point in time 521 is to be different from the point in time 541. The point in time 541 may be later than the point in time 521 as shown in FIG. 5, or may be earlier than the point in time 521.

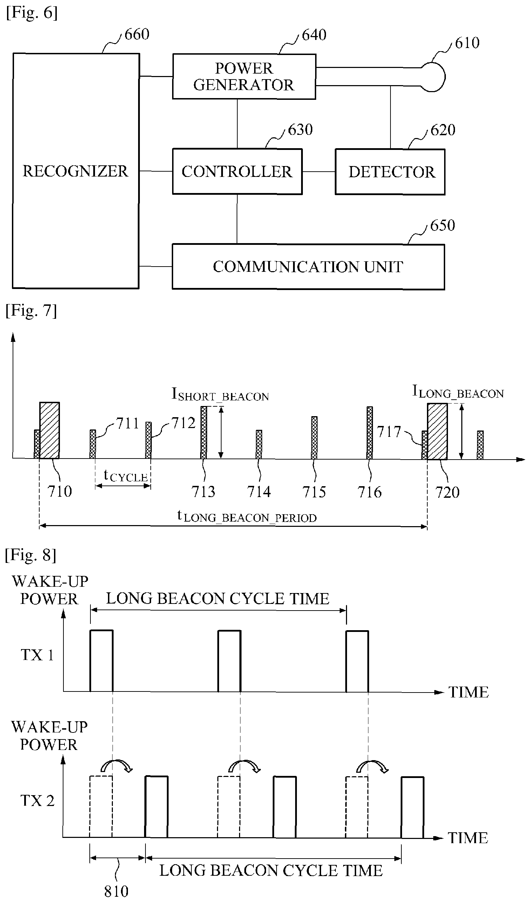

FIG. 6 illustrates another example of a wireless power transmission apparatus.

Referring to FIG. 6, the wireless power transmission apparatus includes a resonator 610, a detector 620, a controller 630, a power generator 640, a communication unit 650, and a recognizer 660.

The resonator 610 periodically transmits a short beacon for recognizing a wireless power reception apparatus, and a long beacon for waking up a communication module of the wireless power reception apparatus. Respective transmission intervals of each of the short beacon and the long beacon and respective points in time at which transmission of each of the short beacon and the long beacon are initiated are determined by the controller 630 and the recognizer 660.

The detector 620 detects a signal induced in the resonator 610. The detector 620 detects the signal induced in the resonator 610 before the long beacon and the short beacon are transmitted through the resonator 610. Before the long beacon and the short beacon are transmitted through the resonator 410, the signal detected in the resonator 610 is induced by another wireless power transmission apparatus.

The controller 630 determines either one or both of a transmission interval of a wake-up power and a point in time at which the wake-up power is transmitted to prevent a waveform of the signal detected by the detector 620 from overlapping a waveform of the wake-up power.

The controller 630 determines the transmission interval of the wake-up power to be different from an interval of the signal detected by the detector 620. For example, the controller 630 may determine the transmission interval of the wake-up power so that the wake-up power is transmitted at a point in time that is different from a point in time at which the detected signal is transmitted. By determining the transmission interval of the wake-up power or the point in time at which the wake-up power is transmitted to be different from the interval of the detected signal or the point in time at which the detected signal is transmitted, a time at which the communication module of the wireless power reception apparatus is woken up may be different from a time at which a communication module of another wireless power reception apparatus is woken up by the signal transmitted by the other wireless power transmission apparatus. A woken-up communication module of the wireless power reception apparatus may form a communication channel with the wireless power transmission apparatus based on a sequence in which communication modules are woken up, thereby preventing the wireless power reception apparatus from forming a communication channel with an incorrect wireless power transmission apparatus.

The power generator 640 generates power to be transmitted through the resonator 610 using a resonant frequency at which a mutual resonance between the wireless power transmission apparatus and the wireless power reception apparatus occurs. For example, the power generator 640 may be supplied with power from a wired power supply, and perform switching to generate power having a resonant frequency through a power amplifier, thereby generating power to be transmitted through the resonator 610.

The communication unit 650 may receive information about either one or both of a transmission interval of a short beacon and a transmission interval of a long beacon from the other wireless power transmission apparatus using BLE communication.

In addition, the communication unit 650 may receive a search message from a woken-up wireless power reception apparatus. The communication unit 650 may transmit information about a communication channel to a wireless power reception apparatus recognized as being normally connected.

When a search message is received from a wireless power reception apparatus operating using the wake-up power, the recognizer 660 controls a point in time at which low power to be used for communication of the wireless power reception apparatus is supplied. For example, the recognizer 660 may transmit to the controller 630 information about the point in time at which the low power is to be supplied. The controller 630 may control the power generator 640 to control the point in time at which the low power is supplied based on the information transmitted from the recognizer 660.

When a search message is received by the communication unit 650, the recognizer 660 controls the point in time at which the low power is supplied so that supply of the low power is blocked for a predetermined time and the low power is re-supplied to the resonator 610 after the predetermined time elapses. When the supply of the low power is blocked, a wireless power reception apparatus located in a charging area of the wireless power transmission apparatus cannot perform communication. When the supply of the low power to the wireless power reception apparatus transmitting the search message is blocked, the wireless power reception apparatus can no longer perform communication.

The predetermined time may be set to be longer than a difference between a time at which the supply of the low power is blocked and a time at which supply of low power is blocked by another wireless power transmission apparatus. Information about the time at which the supply of the low power is blocked by the other wireless power transmission apparatus may be obtained by the communication unit 650.

When the predetermined time elapses, the recognizer 660 resumes the supply of the low power. When the supply of the low power is resumed, the wireless power reception apparatus located in the charging area of the wireless power transmission apparatus wakes up again and transmits a search message.

At a point in time at which the supply of the low power is resumed by the recognizer 660, the supply of the low power is not resumed by the other wireless power transmission apparatus.

After the supply of the low power is resumed, the recognizer 660 may recognize a wireless power reception apparatus transmitting a search message as a normally connected wireless power reception apparatus.

The point in time at which the supply of the low power to be used for the communication of the wireless power reception apparatus is resumed may be set to be different for each wireless power transmission apparatus.

FIG. 7 illustrates an example of a short beacon and a long beacon transmitted by a wireless power transmission apparatus.

Referring to FIG. 7, a time between a long beacon 710 and a next long beacon 720 is a transmission interval t_{LONG_BEACON_PERIOD} of the long beacon 710. A plurality of short beacons 711, 712, 713, 714, 715, 716, and 717 are transmitted in the transmission interval of the long beacon 710. A value of a current I_{LONG_BEACON} of the long beacon 710 is greater than a value of a current I_{SHORT_BEACON} of the short beacons 711, 712, 713, 714, 715, 716, and 717, and the transmission interval of the long beacon 710 is longer than a transmission interval t_{CYCLE} of the short beacons 711, 712, 713, 714, 715, 716, and 717.

The wireless power transmission apparatus adjusts the transmission interval between the long beacon 710 and the next long beacon 720 and a point in time at which transmission of the long beacon 710 is initiated to be different from a transmission interval and a point in time at which transmission of a long beacon is initiated by a neighboring wireless power transmission apparatus.

FIG. 8 illustrates an example of a wireless power transmission apparatus, for example, a TX2, transmitting a long beacon at an initial point that is different from an initial point at which another wireless power transmission apparatus, for example, a TX1, transmits a long beacon.

Referring to FIG. 8, when the TX1 is close to the TX2, magnetic fields generated by the TX1 and the TX2 may interact with each other. In this instance, when the TX2 detects a signal induced in a resonator of the TX2, a waveform of the long beacon transmitted by the TX1 may be detected as indicated by the dashed lines in FIG. 8.

Accordingly, the TX2 adjusts a point in time at which the TX2 transmits the long beacon so that the long beacon is transmitted at a point in time that is different from a point in time of the detected waveform by a period of time 810.

Since the point in time at which the long beacon is transmitted by the TX1 does not overlap the point in time at which the long beacon is transmitted by the TX2, the TX1 and the TX2 may wake up different RXs. Accordingly, a probability that an RX may be misconnected to the TX1 and the TX2 may be reduced.

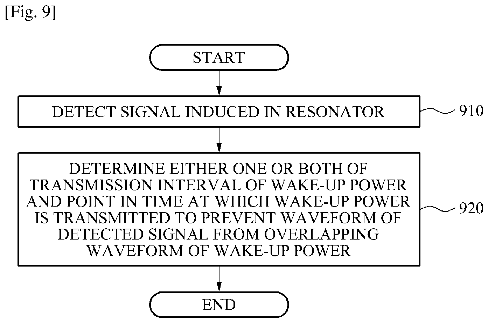

FIG. 9 illustrates an example of a wireless power transmission method.

In particular, FIG. 9 illustrates an example of a wireless power transmission method of preventing a misconnection between a wireless power transmission apparatus and a wireless power reception apparatus in an environment in which a plurality of wireless power transmission apparatuses charge a plurality of wireless power reception apparatuses.

Referring to FIG. 9, in 910, the wireless power transmission apparatus detects a signal induced in a resonator.

The wireless power transmission apparatus may detect an envelope of the signal induced in the resonator before the wireless power transmission apparatus transmits a wake-up power.

In 920, the wireless power transmission apparatus determines either one or both of a transmission interval of the wake-up power and a point in time at which the wake-up power is transmitted to prevent a waveform of the detected signal from overlapping a waveform of the wake-up power.

The wireless power transmission apparatus may determine a transmission interval of a long beacon corresponding to the wake-up power to be different from an interval of the detected signal.

The wireless power transmission apparatus may determine a point in time at which the long beacon is transmitted so that transmission of the long beacon corresponding to the wake-up power is initiated at a point in time that is different from a point in time at which the detected signal has a high value.

The wireless power transmission apparatus may receive information about either one or both of a transmission interval of a short beacon and a transmission interval of a long beacon from another wireless power transmission apparatus using BLE communication.

The wireless power transmission apparatus may transmit, through a resonator, a short beacon for recognizing a wireless power reception apparatus and a long beacon for waking up a communication module of the wireless power reception apparatus based on the determined transmission interval.

The transmission controller 114, the communication units 115 and 124, and the reception controller 125 in FIG. 1, the detector 320 and the controller 330 in FIG. 3, the detector 420, the envelope detector 421, the controller 430, and the communication unit 450 in FIG. 4, and the detector 620, the controller 630, the communication unit 650, and the recognizer 660 in FIG. 6 that perform the various operations described with respect to FIGS. 2, 5, and 7-9 may be implemented using one or more hardware components, one or more software components, or a combination of one or more hardware components and one or more software components.

A hardware component may be, for example, a physical device that physically performs one or more operations, but is not limited thereto. Examples of hardware components include resistors, capacitors, inductors, power supplies, frequency generators, operational amplifiers, power amplifiers, low-pass filters, high-pass filters, band-pass filters, analog-to-digital converters, digital-to-analog converters, and processing devices.

A software component may be implemented, for example, by a processing device controlled by software or instructions to perform one or more operations, but is not limited thereto. A computer, controller, or other control device may cause the processing device to run the software or execute the instructions. One software component may be implemented by one processing device, or two or more software components may be implemented by one processing device, or one software component may be implemented by two or more processing devices, or two or more software components may be implemented by two or more processing devices.

A processing device may be implemented using one or more general-purpose or special-purpose computers, such as, for example, a processor, a controller and an arithmetic logic unit, a digital signal processor, a microcomputer, a field-programmable array, a programmable logic unit, a microprocessor, or any other device capable of running software or executing instructions. The processing device may run an operating system (OS), and may run one or more software applications that operate under the OS. The processing device may access, store, manipulate, process, and create data when running the software or executing the instructions. For simplicity, the singular term "processing device" may be used in the description, but one of ordinary skill in the art will appreciate that a processing device may include multiple processing elements and multiple types of processing elements. For example, a processing device may include one or more processors, or one or more processors and one or more controllers. In addition, different processing configurations are possible, such as parallel processors or multi-core processors.

A processing device configured to implement a software component to perform an operation A may include a processor programmed to run software or execute instructions to control the processor to perform operation A. In addition, a processing device configured to implement a software component to perform an operation A, an operation B, and an operation C may have various configurations, such as, for example, a processor configured to implement a software component to perform operations A, B, and C; a first processor configured to implement a software component to perform operation A, and a second processor configured to implement a software component to perform operations B and C; a first processor configured to implement a software component to perform operations A and B, and a second processor configured to implement a software component to perform operation C; a first processor configured to implement a software component to perform operation A, a second processor configured to implement a software component to perform operation B, and a third processor configured to implement a software component to perform operation C; a first processor configured to implement a software component to perform operations A, B, and C, and a second processor configured to implement a software component to perform operations A, B, and C, or any other configuration of one or more processors each implementing one or more of operations A, B, and C. Although these examples refer to three operations A, B, C, the number of operations that may implemented is not limited to three, but may be any number of operations required to achieve a desired result or perform a desired task.

Software or instructions for controlling a processing device to implement a software component may include a computer program, a piece of code, an instruction, or some combination thereof, for independently or collectively instructing or configuring the processing device to perform one or more desired operations. The software or instructions may include machine code that may be directly executed by the processing device, such as machine code produced by a compiler, and/or higher-level code that may be executed by the processing device using an interpreter. The software or instructions and any associated data, data files, and data structures may be embodied permanently or temporarily in any type of machine, component, physical or virtual equipment, computer storage medium or device, or a propagated signal wave capable of providing instructions or data to or being interpreted by the processing device. The software or instructions and any associated data, data files, and data structures also may be distributed over network-coupled computer systems so that the software or instructions and any associated data, data files, and data structures are stored and executed in a distributed fashion.

For example, the software or instructions and any associated data, data files, and data structures may be recorded, stored, or fixed in one or more non-transitory computer-readable storage media. A non-transitory computer-readable storage medium may be any data storage device that is capable of storing the software or instructions and any associated data, data files, and data structures so that they can be read by a computer system or processing device. Examples of a non-transitory computer-readable storage medium include read-only memory (ROM), random-access memory (RAM), flash memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, magnetic tapes, floppy disks, magneto-optical data storage devices, optical data storage devices, hard disks, solid-state disks, or any other non-transitory computer-readable storage medium known to one of ordinary skill in the art.

Functional programs, codes, and code segments for implementing the examples disclosed herein can be easily constructed by a programmer skilled in the art to which the examples pertain based on the drawings and their corresponding descriptions as provided herein.

While this disclosure includes specific examples, it will be apparent to one of ordinary skill in the art that various changes in form and details may be made in these examples without departing from scope of the claims and their equivalents. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims.

## Claims

1. A wireless power transmission apparatus configured to prevent a misconnection between the wireless power transmission apparatus and a wireless power reception apparatus in an environment in which a plurality of wireless power transmission apparatuses charge a plurality of wireless power reception apparatuses, the wireless power transmission apparatus comprising:
a detector (320, 420, 620) configured to detect a signal induced in a resonator (310, 410, 610), the signal being induced by a signal transmitted by another power transmission apparatus; and
a controller (330, 430, 630) configured to determine either one or both of a transmission interval of a wake-up power and a point in time at which the wake-up power is transmitted to prevent a waveform of the detected signal from overlapping a waveform of the wake-up power.

2. The wireless power transmission apparatus of claim 1, wherein the detector comprises an envelope detector configured to detect an envelope of the induced signal before the wake-up power is transmitted.

3. The wireless power transmission apparatus of claim 1, wherein the resonator is configured to periodically transmit a short beacon for recognizing the wireless power reception apparatus, and a long beacon for waking up a communication module of the wireless power reception apparatus, based on the determined transmission interval, and/or
wherein a transmission interval of the long beacon is longer than a transmission interval of the short beacon, and an amount of power of the long beacon is greater than an amount of power of the short beacon.

4. The wireless power transmission apparatus of claim 1, wherein the controller is further configured to determine a transmission interval of a long beacon corresponding to the wake-up power to be different from an interval of the detected signal.

5. The wireless power transmission apparatus of claim 1, wherein the controller is further configured to determine a point in time at which a long beacon corresponding to the wake-up power is transmitted so that transmission of the long beacon is initiated at a point in time that is different from a point in time at which the detected signal has a high value.

6. The wireless power transmission apparatus of claim 1, further comprising
a communication unit configured to receive information about either one or both of a transmission interval of a short beacon and a transmission interval of a long beacon from another wireless power transmission apparatus using Bluetooth low energy (BLE) communication; and/or
a power generator configured to generate power to be transmitted through the resonator using a resonant frequency at which a mutual resonance between the wireless power transmission apparatus and the wireless power reception apparatus occurs.

7. The wireless power transmission apparatus of claim 1, wherein the controller is further configured to determine a point in time at which a wake-up power is transmitted to be different from a point in time at which a waveform of the detected signal changes.

8. The wireless power transmission apparatus of claim 7, further comprising a recognizer configured to control a point in time at which low power to be used for communication by the wireless power reception apparatus is supplied to the resonator, and to recognize a normal connection of a wireless power reception apparatus located in a charging area of the wireless power transmission apparatus, both in response to a search message being received from the wireless power reception apparatus performing communication using the wake-up power.

9. The wireless power transmission apparatus of claim 8, further comprising a communication unit configured to receive the search message from the wireless power transmission apparatus;
wherein the recognizer is further configured to control the point in time at which the low power is supplied to the resonator so that supply of the low power to the resonator is blocked for a predetermined time and the low power is re-supplied to the resonator after the predetermined time has elapsed, in response to the communication unit receiving the search message.

10. The wireless power transmission apparatus of claim 9, wherein the communication unit is further configured to receive information about either one or both of a transmission interval of a short beacon and a transmission interval of a long beacon from another wireless power transmission apparatus using Bluetooth low energy (BLE) communication.

11. The wireless power transmission apparatus of claim 8, further comprising a power generator configured to generate power to be transmitted through the resonator using a resonant frequency at which a mutual resonance between the wireless power transmission apparatus and the wireless power reception apparatus occurs.

12. The wireless power transmission apparatus of claim 8, wherein the point in time at which the low power to be used for communication by the wireless power reception apparatus is supplied is set to be different for each of the plurality of wireless power transmission apparatuses.

13. A wireless power transmission method of a wireless power transmission apparatus for preventing a misconnection between a wireless power transmission apparatus and a wireless power reception apparatus in an environment in which a plurality of wireless power transmission apparatuses charge a plurality of wireless power reception apparatuses, the method comprising:
(910) a signal induced by a signal received from another wireless power transmission apparatus; and
transmitting a wake-up power to be used for communication by the wireless power reception apparatus based on the detected signal so that the wake-up power is not transmitted while a signal is being received from the other wireless transmission apparatus.

14. The method of claim 13, further comprising determining either one or both of a transmission interval of the wake-up power and a point in time at which the wake-up power is transmitted to prevent a waveform of the detected signal from overlapping a waveform of the wake-up power;
wherein the transmitting comprises transmitting the wake-up power at the determined either one or both of transmission interval of the wake-up power and the point in time at which the wake-up power is transmitted.

15. The method of claim 14, wherein the determining comprises determining either one or both of the transmission interval of the wake-up power to be different from an interval of the detected signal and the point in time at which the wake-up power is transmitted to be different from a point in time at which the detected signal is transmitted.

## Patentansprüche

1. Vorrichtung zur drahtlosen Energieübertragung, die ausgestaltet ist, um eine Fehlverbindung zwischen der Vorrichtung zur drahtlosen Energieübertragung und einer Vorrichtung zur drahtlosen Energieaufnahme in einer Umgebung zu verhindern, in der eine Mehrzahl von Vorrichtungen zur drahtlosen Energieübertragung eine Mehrzahl von Vorrichtungen zur drahtlosen Energieaufnahme auflädt, wobei die Vorrichtung zur drahtlosen Energieübertragung umfasst:
einen Detektor (320, 420, 620), der ausgestaltet ist, um ein in einem Resonator (310, 410, 610) induziertes Signal aufzuspüren, wobei das Signal durch ein von einer anderen Vorrichtung zur Energieübertragung übertragenes Signal induziert wird; und
ein Steuergerät (330, 430, 630), das ausgestaltet ist, um entweder ein Übertragungsintervall einer Weckenergie oder einen Zeitpunkt, zu dem die Weckenergie übertragen wird, oder beide festzulegen, um zu verhindern, dass eine Wellenform des detektierten Signals eine Wellenform der Weckenergie überlappt.

2. Vorrichtung zur drahtlosen Energieübertragung nach Anspruch 1, wobei der Detektor einen Hüllkurvendetektor umfasst, der ausgestaltet ist, um eine Hüllkurve des induzierten Signals aufzuspüren, bevor die Weckenergie übertragen wird.

3. Vorrichtung zur drahtlosen Energieübertragung nach Anspruch 1, wobei der Resonator ausgestaltet ist, um periodisch ein Kurz-Beacon zum Erkennen der Vorrichtung zur drahtlosen Energieaufnahme und ein Lang-Beacon zum Wecken eines Kommunikationsmoduls der Vorrichtung zur drahtlosen Energieaufnahme, auf Basis des festgelegten Übertragungsintervalls, zu übertragen, und/oder
wobei ein Übertragungsintervall des Lang-Beacon länger als ein Übertragungsintervall des Kurz-Beacons ist und eine Energiemenge des Langsignals größer als eine Energiemenge des Kurz-Beacons ist.

4. Vorrichtung zur drahtlosen Energieübertragung nach Anspruch 1, wobei das Steuergerät ferner ausgestaltet ist, um festzulegen, dass sich ein Übertragungsintervall eines Lang-Beacons, das der Weckenergie entspricht, von einem Intervall des aufgespürten Signals unterscheidet.

5. Vorrichtung zur drahtlosen Energieübertragung nach Anspruch 1, wobei das Steuergerät ferner ausgestaltet ist, um einen Zeitpunkt festzulegen, zu dem ein Lang-Beacon, das der Weckenergie entspricht, übertragen wird, sodass Übertragung des Lang-Beacons zu einem Zeitpunkt eingeleitet wird, der sich von einem Zeitpunkt unterscheidet, zu dem das aufgespürte Signal einen hohen Wert aufweist.

6. Vorrichtung zur drahtlosen Energieübertragung nach Anspruch 1, ferner umfassend
ein Kommunikationsgerät, das ausgestaltet ist, um Informationen über entweder ein Übertragungsintervall eines Kurz-Beacons oder ein Übertragungsintervall eines Lang-Beacons von einer anderen Vorrichtung zur drahtlosen Energieübertragung unter Verwendung von Bluetooth-Low-Energy-(BLE)-Kommunikation, oder beide, zu empfangen; und/oder
einen Energiegenerator, der ausgestaltet ist, um Energie zu erzeugen, die durch den Resonator unter Verwendung einer Resonanzfrequenz zu übertragen ist, bei der eine gegenseitige Resonanz zwischen der Vorrichtung zur drahtlosen Energieübertragung und der Vorrichtung zur drahtlosen Energieaufnahme auftritt.

7. Vorrichtung zur drahtlosen Energieübertragung nach Anspruch 1, wobei das Steuergerät ferner ausgestaltet ist, um festzulegen, dass sich ein Zeitpunkt, zu dem eine Weckenergie übertragen wird, von einem Zeitpunkt unterscheidet, zu dem sich eine Wellenform des aufgespürten Signals ändert.

8. Vorrichtung zur drahtlosen Energieübertragung nach Anspruch 7, ferner umfassend einen Erkenner, der ausgestaltet ist, um einen Zeitpunkt zu steuern, zu dem Niederenergie, die zur Kommunikation durch die Vorrichtung zur drahtlosen Energieaufnahme zu verwenden ist, dem Resonator zugeführt wird, und um eine normale Verbindung einer Vorrichtung zur drahtlosen Energieaufnahme, die sich in einem Aufladebereich der Vorrichtung zur drahtlosen Energieübertragung befindet, zu erkennen, wobei beide auf eine Suchmeldung ansprechen, die von der Vorrichtung zur drahtlosen Energieaufnahme, die Kommunikation unter Verwendung der Weckenergie durchführt, empfangen wird.

9. Vorrichtung zur drahtlosen Energieübertragung nach Anspruch 8, ferner umfassend ein Kommunikationsgerät, das ausgestaltet ist, um die Suchmeldung von der Vorrichtung zur drahtlosen Energieübertragung zu empfangen;
wobei der Erkenner ferner ausgestaltet ist, um den Zeitpunkt zu steuern, zu dem die Niederenergie dem Resonator zugeführt wird, sodass Zuführung der Niederenergie an den Resonator für eine vorbestimmte Zeit blockiert ist und die Niederenergie dem Resonator nach Ablauf der vorbestimmten Zeit wieder zugeführt wird, als Reaktion darauf, dass das Kommunikationsgerät die Suchmeldung empfängt.

10. Vorrichtung zur drahtlosen Energieübertragung nach Anspruch 9, wobei das Kommunikationsgerät ferner ausgestaltet ist, um Informationen über entweder ein Übertragungsintervall eines Kurz-Beacons oder ein Übertragungsintervall eines Lang-Beacons von einer anderen Vorrichtung zur drahtlosen Energieübertragung unter Verwendung von Bluetooth-Low-Energy-(BLE)-Kommunikation, oder beide, zu empfangen.

11. Vorrichtung zur drahtlosen Energieübertragung nach Anspruch 8, ferner umfassend einen Energiegenerator, der ausgestaltet ist, um Energie zu erzeugen, die durch den Resonator unter Verwendung einer Resonanzfrequenz zu übertragen ist, bei der eine gegenseitige Resonanz zwischen der Vorrichtung zur drahtlosen Energieübertragung und der Vorrichtung zur drahtlosen Energieaufnahme auftritt.

12. Vorrichtung zur drahtlosen Energieübertragung nach Anspruch 8, wobei der Zeitpunkt, zu dem die Niederenergie zugeführt wird, die zur Kommunikation durch die Vorrichtung zur drahtlosen Energieaufnahme zu verwenden ist, bei jeder der Mehrzahl von Vorrichtungen zur drahtlosen Energieübertragung unterschiedlich eingestellt ist.

13. Verfahren zur drahtlosen Energieübertragung einer Vorrichtung zur drahtlosen Energieübertragung zum Verhindern einer Fehlverbindung zwischen einer Vorrichtung zur drahtlosen Energieübertragung und einer Vorrichtung zur drahtlosen Energieaufnahme in einer Umgebung, in der eine Mehrzahl von Vorrichtungen zur drahtlosen Energieübertragung eine Mehrzahl von Vorrichtungen zur drahtlosen Energieaufnahme auflädt, wobei das Verfahren umfasst:
(910) ein Signal, das von einem Signal induziert wird, das von einer anderen Vorrichtung zur drahtlosen Energieübertragung empfangen wird; und
Übertragen einer Weckenergie, die zur Kommunikation von der Vorrichtung zur drahtlosen Energieaufnahme auf Basis des aufgespürten Signals zu verwenden ist, sodass die Weckenergie nicht übertragen wird, während ein Signal von der anderen Vorrichtung zur drahtlosen Übertragung empfangen wird.

14. Verfahren nach Anspruch 13, ferner umfassend das Festlegen entweder eines Übertragungsintervalls der Weckenergie oder eines Zeitpunkts, zu dem die Weckenergie übertragen wird, oder beider, um zu verhindern, dass eine Wellenform des aufgespürten Signals eine Wellenform der Weckenergie überlappt;
wobei das Übertragen das Übertragen der Weckenergie entweder in dem festgelegten Übertragungsintervall der Weckenergie oder zu dem festgelegten Zeitpunkt, zu dem die Weckenergie übertragen wird, oder beide umfasst.

15. Verfahren nach Anspruch 14, wobei das Festlegen das Festlegen dessen, dass sich entweder das Übertragungsintervall der Weckenergie von einem Intervall des aufgespürten Signals unterscheidet, oder sich der Zeitpunkt, zu dem die Weckenergie übertragen wird, von einem Zeitpunkt unterscheidet, zu dem das aufgespürte Signal übertragen wird, oder beider umfasst.

## Revendications

1. Appareil de transmission d'énergie sans fil, conçu pour éviter une mauvaise connexion entre ledit appareil de transmission d'énergie sans fil et un appareil de réception d'énergie sans fil dans un environnement dans lequel une pluralité d'appareils de transmission d'énergie sans fil chargent une pluralité d'appareils de réception d'énergie sans fil, comprenant :
un détecteur (320, 420, 620), conçu pour détecter un signal induit dans un résonateur (310, 410, 610), ledit signal étant induit par un signal transmis par un autre appareil de transmission d'énergie ; et
une commande (330, 430, 630), conçue pour déterminer un ou les deux intervalles de transmission d'une énergie d'activation et un moment auquel l'énergie d'activation est transmise pour éviter qu'une forme d'onde du signal détecté se superpose à une forme d'onde de l'énergie d'activation.

2. Appareil de transmission d'énergie sans fil selon la revendication 1, le détecteur comprenant un détecteur d'enveloppe conçu pour détecter une enveloppe du signal induit avant que l'énergie d'activation ne soit transmise.

3. Appareil de transmission d'énergie sans fil selon la revendication 1, le résonateur étant conçu pour transmettre périodiquement une balise courte destinée à reconnaître l'appareil de réception d'énergie sans fil et une balise longue destinée à activer un module de communication de l'appareil de réception d'énergie sans fil, en fonction de l'intervalle de transmission déterminé, et/ou
un intervalle de transmission de la balise longue étant plus long qu'un intervalle de transmission de la balise courte, et une quantité d'énergie de la balise longue étant supérieure à une quantité d'énergie de la balise courte.

4. Appareil de transmission d'énergie sans fil selon la revendication 1, la commande étant en outre conçue pour déterminer un intervalle de transmission d'une balise longue correspondant à l'énergie d'activation pour être différent d'un intervalle du signal détecté.

5. Appareil de transmission d'énergie sans fil selon la revendication 1, la commande étant en outre conçue pour déterminer un moment auquel une balise longue correspondant à l'énergie d'activation est transmise de telle sorte que la transmission de la balise longue est initiée à un moment, lequel est différent d'un moment auquel le signal détecté présente une valeur élevée.

6. Appareil de transmission d'énergie sans fil selon la revendication 1, comprenant en outre :
une unité de communication, conçue pour recevoir des informations sur un ou sur les deux intervalles de transmission d'une balise courte et un intervalle de transmission d'une balise longue à partir d'un autre appareil de transmission d'énergie sans fil utilisant une communication à faible énergie Bluetooth (BLE) ; et/ou
un générateur d'énergie, conçu pour générer de l'énergie à transmettre, par l'intermédiaire du résonateur, en utilisant une fréquence de résonance à laquelle une résonance mutuelle se produit entre l'appareil de transmission d'énergie sans fil et l'appareil de réception d'énergie sans fil.

7. Appareil de transmission d'énergie sans fil selon la revendication 1, la commande étant en outre conçue pour déterminer un moment auquel une énergie d'activation est transmise pour être différente d'un moment auquel une forme d'onde du signal détecté change.

8. Appareil de transmission d'énergie sans fil selon la revendication 7, comprenant en outre un reconnaisseur, conçu : pour commander un moment auquel une faible puissance, à utiliser pour la communication par l'appareil de réception sans fil, est fournie au résonateur ; et pour reconnaître une connexion normale d'un appareil de réception d'énergie sans fil situé dans une zone de charge de l'appareil de transmission d'énergie sans fil, les deux en réponse à un message de recherche reçu de l'appareil de réception d'énergie sans fil effectuant une communication utilisant l'énergie d'activation.

9. Appareil de transmission d'énergie sans fil selon la revendication 8, comprenant en outre une unité de communication, conçue pour recevoir le message de recherche à partir de l'appareil de transmission d'énergie sans fil ;
le reconnaisseur étant en outre conçu pour commander le moment auquel la faible énergie est fournie au résonateur de telle sorte que la fourniture de la faible énergie au résonateur est bloquée pendant une durée prédéterminée et que la faible énergie est à nouveau fournie au résonateur, lorsque la durée prédéterminée s'est écoulée, en réponse à la réception par l'unité de communication du message de recherche.

10. Appareil de transmission d'énergie sans fil selon la revendication 9, l'unité de communication étant en outre conçue pour recevoir des informations sur un ou sur les deux intervalles de transmission d'une balise courte et sur un intervalle de transmission d'une balise longue sur un autre appareil de transmission sans fil utilisant une communication à faible énergie Bluetooth (BLE).

11. Appareil de transmission d'énergie sans fil selon la revendication 8, comprenant en outre un générateur d'énergie, conçu pour générer de l'énergie à transmettre, par l'intermédiaire du résonateur, en utilisant une fréquence de résonance à laquelle une résonance mutuelle se produit entre l'appareil de transmission d'énergie sans fil et l'appareil de réception sans fil.

12. Dispositif de transmission d'énergie sans fil selon la revendication 8, le moment auquel la faible énergie, à utiliser pour la communication par l'appareil de réception sans fil, est fournie étant réglé pour être différent pour l'appareil de transmission d'énergie sans fil respectif de la pluralité d'appareils de transmission d'énergie sans fil.

13. Procédé de transmission d'énergie sans fil d'un appareil de transmission d'énergie sans fil permettant d'éviter une mauvaise connexion entre un appareil de transmission d'énergie sans fil et un appareil de réception d'énergie sans fil dans un environnement dans lequel une pluralité d'appareils de transmission d'énergie sans fil chargent une pluralité d'appareils de réception d'énergie sans fil, ledit procédé comprenant les étapes suivantes :
(910) l'induit d'un signal par un signal reçu d'un autre appareil de transmission d'énergie sans fil ; et
la transmission d'une énergie d'activation, à utiliser pour une communication par l'appareil de réception d'énergie sans fil, en fonction du signal détecté de telle sorte que l'énergie d'activation n'est pas transmise lorsqu'un signal est reçu à partir de l'autre appareil de transmission sans fil.

14. Procédé selon la revendication 13, comprenant en outre l'étape de la détermination d'un ou des deux intervalles de transmission d'énergie d'activation et d'un moment auquel l'énergie d'activation est transmise pour éviter qu'une forme d'onde du signal détecté se superpose à une forme d'onde de l'énergie d'activation ;
la transmission comprenant la transmission de l'énergie d'activation à un ou à deux intervalles déterminés de l'énergie d'activation et au moment auquel l'énergie d'activation est transmise.

15. Procédé selon la revendication 14, la détermination comprenant la détermination d'un ou des deux intervalles de transmission de l'énergie d'activation pour être différents d'un intervalle du signal détecté et du moment auquel l'énergie d'activation est transmise pour être différent d'un moment auquel le signal détecté est transmis.
